(19) Europäisches Patentamt
European Patent Office
Office européen des brevets

(11) **EP 4 369 452 A1**

(12) **EUROPEAN PATENT APPLICATION**

(43) Date of publication:
**15.05.2024 Bulletin 2024/20**

(21) Application number: **23208155.4**

(22) Date of filing: **07.11.2023**

(51) International Patent Classification (IPC):
*H01M 10/0525* (2010.01)     *H01M 50/403* (2021.01)
*H01M 50/409* (2021.01)     *H01M 50/431* (2021.01)
*H01M 50/46* (2021.01)

(52) Cooperative Patent Classification (CPC):
**H01M 50/403; H01M 10/0525; H01M 50/409;
H01M 50/431; H01M 50/46**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.11.2022 CN 202211413685**

(71) Applicant: **AESC Japan Ltd.
Kanagawa, 2520012 (JP)**

(72) Inventors:
• YAN, Yongsi
Pudong New Area Shanghai, 201315 (CN)
• MO, Fangjie
Pudong New Area Shanghai, 201315 (CN)
• YANG, Yuanying
Pudong New Area Shanghai, 201315 (CN)
• SUN, Huayu
Pudong New Area Shanghai, 201315 (CN)

(74) Representative: **Becker, Eberhard
Becker Kurig & Partner
Patentanwälte mbB
Bavariastraße 7
80336 München (DE)**

(54) **SECONDARY BATTERY AND PREPARATION METHOD THEREOF**

(57)     The invention provides a secondary battery and a preparation method thereof. The secondary battery includes a separator (1) disposed at a side of a positive electrode and/or a negative electrode; the separator (1) includes an active material, an initiator, and a foaming agent. The active material includes a porous graphene oxide; a mass ratio of the initiator, the foaming agent, and the porous graphene oxide is (1-5):(1-10):(1-5). In the invention, a foaming material is coated at a surface of a side of the positive electrode and/or the negative electrode, so that the foaming material may foam during baking to form a separator-like layer having good ductility.

Fig. 1

**Description**

BACKGROUND OF THE INVENTION

Field of the Invention

The invention belongs to the technical field of secondary batteries, and in particular relates to a secondary battery and a preparation method thereof.

Description of Related Art

At present, most of the separators used in lithium-ion batteries are polyolefin separators, which have the disadvantage of being thin, non-electrically conductive, and non-thermally conductive. Micropores need to be created on the surface of the polyolefin-based film, so that the electrolyte solution may pass through. At the same time, the phase separation technique of the separator is relatively cumbersome, and in the prior art, when the battery core is wound, the curvature of the negative electrode sheet at the corner of the first few turns is larger. At the same time, because of the tight winding core thereof, tension is also greater, which often leads to the cracking and powder dropping of the separator at the corner of the negative electrode sheet in the first few turns, and even causing phenomena such as strip-like shedding and copper leakage.

As the market's requirements for battery life are increased, the performance requirements for separators in lithium-ion batteries are higher. The currently used polyolefin separator has a high thermal shrinkage rate at high temperature, which may lead to a short circuit of the battery and cause a safety accident. Accordingly, the researchers applied a heat-resistant coating on the surface of the separator to improve the high-temperature stability of the separator, but this hindered the further improvement of the energy density of the battery. If the base film or coating of the isolation film is thinned, the electrolyte permeability may be improved after thinning, but the puncture ability and thermal shrinkage resistance thereof are decreased, which may readily lead to greater cell safety risks.

Based on the above, in the art, there is an urgent need to develop a separator-free lithium-ion battery to not only improve the space utilization rate and energy density of the battery, but also achieve good electrochemical performance and heat resistance without a separator.

SUMMARY OF THE INVENTION

Aiming at the deficiencies of the prior art, the object of the invention is to provide a negative electrode, a preparation method thereof, and an electrochemical device. The invention utilizes the principle of chemical foaming to coat the surface of the negative electrode with a foaming material so that the foaming material foams during baking to form a separator-like layer without using a separator.

To achieve this object of the invention, the invention adopts the following technical solutions:

In the first aspect, the invention provides a secondary battery. The secondary battery includes a separator disposed at a side of a positive electrode and/or a negative electrode; the separator includes an active material, an initiator, and a foaming agent.

In the second aspect, the invention provides a method of preparing a secondary battery according to the first aspect. A preparation method of the separator includes the following steps: an active material, an initiator, and a foaming agent are mixed to obtain a composite material, and the composite material is rolled and dried to obtain the separator.

Compared with existing techniques, the invention has the following beneficial effects:

The invention provides a negative electrode having a separator-like layer, adopting the principle of chemical foaming to coat the surface of the negative electrode with a foaming material, so that when baked, the foaming agent is decomposed, causing the active material to foam, and a separator-like layer is generated in situ without the use of a separator. Moreover, the invention adopts porous graphene oxide as the active material. First, this avoids excessive cell growth of the foaming material, thereby limiting the foaming pore size of the material, and the addition of the porous graphene oxide may make the prepared negative electrode have good ductility and elongation at break. Next, since graphene oxide is thermally conductive but not electrically conductive, graphene oxide may conduct the heat generated during acupuncture. At the same time, graphene oxide may increase the mechanical strength and thermal conductivity of the material during use. Lastly, the first layer contains graphene oxide material inside to increase the compatibility with the negative electrode material.

BRIEF DESCRIPTION OF THE DRAWINGS

FIGURE is a schematic structural diagram of the negative electrode provided in Example 1.

REFERENCE SIGNS LIST

1: first layer
2: active substance layer
3: copper foil

DESCRIPTION OF THE EMBODIMENTS

The technical solution of the invention is further described below in conjunction with the drawings and specific embodiments. It should be clear to those skilled in the art that the examples are only for facilitating understanding of the invention, and should not be regarded as specific limitations on the invention.

Reference herein to "example" means that a particular feature, structure, or characteristic described in connection with the example may be included in at least one example of the disclosure. The occurrences of this phrase in various places in the specification are not necessarily all referring to the same example, nor are separate or alternative examples mutually exclusive of other examples. It is understood explicitly and implicitly by those skilled in the art that the examples described herein may be combined with other examples.

The term "and/or" in the present specification is just an association relationship that describes related objects, indicating that three relationships may exist. For example, A and/or B may mean: the three situations of A alone exists, both A and B exist, and B exists alone. In addition, the character "I" in the present specification generally indicates that the contextual objects are an "or" relationship.

In order to solve the issues in the prior art that the separator has poor electrical and thermal conductivity and that the active substance layer in the negative electrode is prone to powdering and cracking, the invention provides a negative electrode having a separator-like layer, wherein the surface of the negative electrode is coated with a foaming material so that the foaming material foams during baking to form a separator-like layer without the need for a separator.

In the first aspect, the invention provides a negative electrode, and a first layer is disposed at at least a side of the negative electrode;

The first layer includes an active material, an initiator, and a foaming agent;

The active material includes porous graphene oxide;

The mass ratio of the initiator, the foaming agent, and the porous graphene oxide is (1-5):(1-10):(I-5).

The invention adopts the principle of chemical foaming to coat the surface of the negative electrode with a foaming material, so that when baked, the foaming agent is decomposed, causing the active material to foam, and a separator-like layer is generated in situ without the use of a separator. Moreover, the invention adopts porous graphene oxide as the active material. First, this avoids excessive cell growth of the foaming material, thereby limiting the foaming pore size of the material, and the addition of the porous graphene oxide may make the prepared negative electrode have good ductility and elongation at break. Next, since graphene oxide is thermally conductive but not electrically conductive, graphene oxide may conduct the heat generated during acupuncture. At the same time, graphene oxide may increase the mechanical strength and thermal conductivity of the material during use. Lastly, the first layer contains graphene oxide material inside to increase the compatibility with the negative electrode material. The self-foaming separator provided by the invention may improve the energy density of the battery, and the foaming formula is highly universal and is not specific to a single polymer material.

Moreover, in the invention, the pore size of the foamed material is controlled within an appropriate range by regulating the mass ratio of the initiator, the foaming agent, and the porous graphene oxide to ensure that the foamed material plays the same role as a separator while having good ductility and elongation at break. When the mass ratio exceeds the above range, the pore diameter within this range cannot be obtained, and it is difficult to ensure that the above excellent performance is achieved at the same time.

In some embodiments, the active material further includes a polymer.

In some embodiments, the polymer includes any one or a combination of at least two of polyethylene, polypropylene, polyurethane, or polyethylene terephthalate, and may be, for example, polyethylene, polypropylene, polyurethane, or polyethylene terephthalate. For the sake of brevity, combinations within the above range are not listed one by one.

In some embodiments, the molecular weight of the polymer is 100,000 to 500,000, such as 100,000, 150,000, 200,000, 250,000, 300,000, 350,000, 400,000, 450,000, and 500,000. For the sake of brevity, the numerical values within the above range are not listed one by one.

In the invention, by adjusting the molecular weight of the polymer, the polymer may melt synchronously with the temperature rise process and foam smoothly. If the molecular weight is too low, the polymer melts prematurely, and if the molecular weight is too high, the polymer is more difficult to melt.

In some embodiments, the foaming agent includes a combination of stearic acid, zinc stearate, and calcium carbonate.

In some embodiments, the mass ratio of stearic acid, zinc stearate, and calcium carbonate in the foaming agent is (0.5 to 2):(0.5 to 2):(1 to 2), and may be, for example, 0.5:0.5:1, 0.8:0.8: 1.2, 1:1:1.5, 1.2:1.5:1.5, 1.8:0.8:1.8, 1:1:1. For the sake of brevity, the numerical values within the above range are not listed one by one.

In some embodiments, the first layer further includes a plasticizer and an antioxidant.

In the invention, the plasticizer and the antioxidant are added in the first layer in order to prevent the electrolyte solution from corroding the separator-like material formed by the first layer, thereby playing a protective role.

In some embodiments, the plasticizer includes any one or a combination of at least two of dibutyl phthalate, 1,3-butanediol, glycerin, or paraffin oil, for example dibutyl phthalate, 1,3-butanediol, glycerin, or paraffin oil. For the sake of brevity, combinations within the above range are not listed one by one.

In some embodiments, the antioxidant includes antioxidant 1010 (pentaerythritol tetrakis(3-(3,5-di-tert-butyl-4-hydroxyphenyl)propionate)) and/or antioxidant 168 (tris[2.4-di-tert-butylphenyl]phosphite).

In some embodiments, the thickness of the first layer is 5 $\mu$m to 15 $\mu$m, and for example, may be 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m.

In some embodiments, the negative electrode further includes a second layer.

In some embodiments, the second layer includes graphite, specifically natural graphite, artificial graphite, or hard carbon, etc., and the thickness thereof is 10 $\mu$m to 80 $\mu$m.

In the second aspect, the invention provides a method of preparing the negative electrode according to the first aspect, the method including the following steps:

An active material, an initiator, and a foaming agent are mixed to obtain a composite material, and the composite material is rolled on at least a side of the negative electrode and dried to obtain the separator.

In some embodiments, the thickness of the composite material is 5 $\mu$m to 10 $\mu$m, for example, 5 $\mu$m, 6 $\mu$m, 7 $\mu$m, 8 $\mu$m, 9 $\mu$m, 10 $\mu$m. For the sake of brevity, the values within the above range are not listed one by one.

In some embodiments, the composite material further includes a plasticizer and an antioxidant.

In some embodiments, the temperature of drying is 120 °C and the time thereof is 2h to 4h.

It should be noted that the negative electrode further includes a second layer, and the second layer includes graphite.

In the third aspect, the invention provides an electrochemical device. The electrochemical device includes a positive electrode, a negative electrode, and an electrolyte solution. The negative electrode is the negative electrode according to the first aspect.

The lithium ion battery prepared by the negative electrode provided by the invention has the advantage of high energy density.

The influence of the negative electrode prepared by the invention on the electrochemical performance is explained below by assembling the negative electrode prepared according to the formula in the specific examples and comparative examples in the same battery.

**Positive electrode preparation:**

The positive electrode active substance $LiNi_{0.8}Co_{0.1}Mn_{0.1}O_2$, polyvinylidene fluoride as the binder, and Super P as the conductive agent were mixed in a weight ratio of 97:2:1, and an appropriate amount of solvent N-methylpyrrolidone (NMP) was added to prepare positive electrode slurry, and then the positive electrode slurry was coated on an aluminum foil, and dried and rolled to obtain the positive electrode.

In some other embodiments, the positive electrode active substance described in the invention may be a lithium-containing composite oxide. Specific examples may include, for example, $LiMnO_2$, $LiFeO_2$, $LiMn_2O_4$, $Li_2FeSiO_4$, $LiNi_{1/3}Co_{1/3}Mn_{1/3}O_2$, $LiNi_5CO_2Mn_3O_2$, $Li_zNi_{(1-x-y)}Co_xM_yC)_2$ (wherein $0.01 \leq x \leq 0.20$, $0 \leq y \leq 0.20$, $0.97 \leq z \leq 1.20$, M represents at least one element selected from Mn, V, Mg, Mo, Nb, and Al), $LiFePO_4$, and $Li_zCO_{(1-x)}M_xO_2$ (wherein $0 \leq x \leq 0.1$, $0.97 \leq z \leq 1.20$, M represents at least one element selected form the group consisting of Mn, Ni, V, Mg, Mo, Nb, and Al).

**Negative electrode preparation:**

Graphite, conductive carbon black, and sodium carboxymethylcellulose were mixed in a ratio of 96:1:3, deionized water was added to prepare a negative electrode slurry, then the negative electrode slurry was applied on a copper foil, then drying was performed and the copper foil was rolled to obtain the negative electrode.

In some other embodiments, the negative active material graphite described in the invention may be replaced with a material that may intercalate and deintercalate lithium. It includes but not limited to a carbon material such as crystalline carbon (natural graphite and artificial graphite, etc.), amorphous carbon, carbon-coated graphite, and resin-coated graphite, or an oxide material such as indium oxide, silicon oxide, tin oxide, lithium titanate, zinc oxide, or lithium oxide, or may be a lithium metal or a metal material that may form an alloy with lithium. Examples of the metal material that may form an alloy with lithium include Cu, Sn, Si, Co, Mn, Fe, Sb, and Ag. A binary or ternary alloy containing these metals and lithium may also be used as negative electrode active substances. These negative electrode active substances may be used alone or in combination of two or more. From the perspective of increasing energy density, a carbon material such as graphite may also be used in combination with a Si-based material such as Si, Si alloy, and Si oxide. However, graphite is preferred.

**Preparation of electrolyte solution:**

The organic solvent was a mixture of ethylene carbonate (EC), ethyl methyl carbonate (EMC), and diethyl carbonate (DEC), wherein the volume ratio of EC, EMC, and DEC was 20:20:60. In an argon atmosphere glove box having a water content <10 ppm, sufficiently dried lithium salt ($LiPF_6$) was dissolved in the organic solvent, and the electrolyte solution was obtained after mixing evenly, wherein the concentration of $LiPF_6$ was 1 mol/L.

In some other embodiments, the electrolyte solution typically includes a non-aqueous solvent, lithium salt, and additive.

The non-aqueous solvent may be a conventional non-aqueous solvent in the art, preferably an ester solvent, and more preferably a carbonate solvent. In particular, the carbonate solvent is preferably one or a plurality of ethylene carbonate, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), and butylene carbonate (BC).

Examples of the lithium salt may include at least one of $LiPF_6$, $LiBF_4$, $LiN(SO_2F)_2$ (abbreviated as LiFSI), $LiClO_4$, $LiAsF_6$, $LiB(C_2O_4)_2$ (abbreviated as LiBOB), $LiBF_2(C_2O_4)$ (abbreviated as LiDFOB), $LiN(SO_2R_F)_2$, $LiN(SO_2F)(SO_2R_F)$. Preferably, the content thereof in the electrolyte solution is 5% to 20%.

The additive is preferably one or a plurality of vinylene carbonate (VC), fluoroethylene carbonate (FEC), vinyl ethylene carbonate (VEC), ethylene sulfate (DTD), vinylene sulfate, 1,3-propane sultone (PS), propenyl sultone, and 1,4-butane sultone. The conventional amount of the additive in the electrolyte solution is 1% to 4% of the electrolyte solution, for example, 2%.

**Lithium-ion battery preparation:**

A positive electrode sheet, a separator, and the negative electrode sheet prepared above were laminated in sequence, so that the separator was located between the positive and negative electrode sheets to play an isolation role. Then, the product was wrapped with aluminum plastic film and transferred to a vacuum oven to dry at 120 °C. After 3.0 g/Ah electrolyte solution was injected, the opening was sealed. After processes such as leaving alone, hot and cold pressing, formation, clamping, volume division, a soft-pack battery (lithium-ion battery) having a capacity of 1 Ah was formed.

The specific substances and components used in each example and comparative example are as follows.

**Examples**

Example 1 provides a negative electrode. As shown in FIGURE, a first layer having a thickness of 10 $\mu$m was provided at two sides of the negative electrode. The first layer included 2 parts by weight of active material, 1 part by weight of azobisisobutyronitrile initiator, 2 parts by weight of foaming agent, 1 part by weight of dibutyl phthalate, and 0.1 parts by weight of antioxidant 1010, wherein the active material included porous graphene oxide and polyethylene terephthalate (molecular weight 300,000), and the mass ratio of the azobisisobutyronitrile initiator, the foaming agent (the mass ratio of stearic acid, zinc stearate, and calcium carbonate was 0.5:0.5:1), and the porous graphene oxide was 1:2:2. The second layer consisted of artificial graphite having a thickness of 20 $\mu$m, and the second layer was located between the first layer and the copper foil (current collector).

Example 1 also provides a method of preparing a negative electrode including the following steps: The active material, the initiator, the foaming agent, the dibutyl phthalate, and the antioxidant 1010 were mixed to obtain a composite material having a thickness of 10 $\mu$m. The composite material was rolled on both sides of the negative electrode, and dried at 120 °C for 3 hours to obtain the negative electrode.

**Test conditions**

A performance test was performed on batteries filled with the negative electrodes of Example 1 to Example 6 and Comparative example 1 to Comparative example 3, and the specific test method is as follows:

[Thermal conductivity]

The sheet was made into a circular flat plate having a diameter of 3 cm, and the thermal conductivity of the material was tested at 25 °C using a thermal conductivity meter according to ASTM-D5470-2012.

[Liquid absorption rate]

The separators of the same mass were weighed respectively, masses $m_0$ of the separators were recorded, the separators were placed into an electrolyte solution and soaked for 1 hour, removed, left alone for 2 minutes until the electrolyte solution stopped dripping, and a mass m was weighed. The liquid absorption rate was calculated using the following formula:

$$\text{Liquid absorption rate} = (m - m_0)/m_0 \times 100\%.$$

[Tensile property test]

A universal electronic tensile machine was used for testing: Instron 4465 type, and the sample was prepared according to ASTM D638-2014 for testing, the tensile speed was 50 mm/min, and the elongation at break of the material was recorded.

Other Examples and Comparative examples were changed for their parameters on the basis of Example 1, and the parameters of specific changes and corresponding test results are as shown in Table 1:

Table 1

|  | Formula Ratio of initiator, foaming agent, and graphene oxide | Thermal conductivity (W/mk) | Liquid absorption rate (%) | Elongation at break (%) |
|---|---|---|---|---|
| Example 1 | 1:2:2 | 0.931 | 55 | 150.0 |
| Example 2 | 1:1:1 | 0.752 | 43 | 152.0 |
| Example 3 | 2:1:1 | 0.679 | 41 | 145.0 |
| Example 4 | 3:3:1 | 0.599 | 37 | 135.7 |
| Example 5 | 1:10:1 | 0.512 | 47 | 105.4 |
| Example 6 | 5:1:5 | 0.814 | 42 | 154.5 |
| Comparative example 1 | 1:1:0 | 0.431 | 45 | 113.4 |
| Comparative example 2 | 1:0:1 | 0.653 | 0 | 1200.0 |
| Comparative example 3 | 1:1:10 | 0.981 | 21 | 56.1 |

It may be seen from the data of Table 1 that the negative electrodes provided in Example 1 to Example 6 of the invention had good thermal conductivity, good wettability to the electrolyte solution, and higher elongation at break. Specifically, the thermal conductivity of the negative electrodes provided in Example 1 to Example 6 was not less than 0.512 W/mk, the liquid absorption rate thereof was not less than 37%, and the elongation at break thereof was not less than 105.4%.

Comparative example 1 shows that no graphene oxide material was added. Since graphene oxide has the characteristics of thermal conductivity, lyophilicity, and high elongation at break, the comprehensive performance of the prepared negative electrode was not as good as that of the negative electrode provided in Example 1; Comparative example 2 shows that when no foaming agent material was added, the active material may not be foamed, and a separator-like layer may not be obtained, so the wettability to the electrolyte solution was worse; Comparative example 3 shows that when the mass of the porous graphene oxide was too high, although thermal conductivity was higher to a certain extent, a material having a suitable pore size was not obtained, and good ductility and elongation at break were not both achieved.

It may be seen that in the invention, the pore size of the foamed material is controlled within an appropriate range by regulating the mass ratio of the initiator, the foaming agent, and the porous graphene oxide to ensure the foamed material functions as a separator, and at the same time has good ductility and elongation at break.

**Claims**

1. A secondary battery, comprising a positive electrode and a negative electrode, wherein the secondary battery comprises a separator (1) disposed at a side of the positive electrode and/or the negative electrode;
the separator (1) comprises an active material, an initiator, and a foaming agent.

2. The secondary battery according to claim 1, wherein the active material comprises a porous graphene oxide and/or a polymer;

   the polymer comprises any one or a combination of at least two of polyethylene, polypropylene, polyurethane, or polyethylene terephthalate;
   a molecular weight of the polymer is 100,000 to 500,000.

3. The secondary battery according to claim 2, wherein a mass ratio of the initiator, the foaming agent, and the porous graphene oxide is (1 to 5):(1 to 10):(1 to 5).

4. The secondary battery according to claim 1, wherein the foaming agent comprises stearic acid, zinc stearate, and calcium carbonate;
a mass ratio of stearic acid, zinc stearate, and calcium carbonate in the foaming agent is (0.5 to 2):(0.5 to 2):(1 to 2).

5. The secondary battery according to claim 1, wherein the separator (1) also comprises a plasticizer and an antioxidant;

   the plasticizer comprises any one or a combination of at least two of dibutyl phthalate, 1,3-butanediol, glycerin, or paraffin oil;
   the antioxidant comprises an antioxidant 1010 and/or an antioxidant 168.

6. The secondary battery according to claim 1, wherein a thickness of the separator (1) is 5 $\mu$m to 15 $\mu$m.

7. The secondary battery according to claim 1, further comprising an electrolyte solution, and the separator (1) is disposed at a side of the negative electrode;

   the negative electrode comprises a current collector and a negative active substance layer (2) disposed on at least a side of the current collector (3);
   the negative active substance layer (2) comprises graphite.

8. A method of preparing a secondary battery, wherein the secondary battery is the secondary battery according to claim 1, wherein a preparation method of the separator (1) comprises the following steps:
mixing an active material, an initiator, and a foaming agent to obtain a composite material, and rolling and drying the composite material to obtain the separator (1).

9. The method of preparing the secondary battery according to claim 8, wherein a thickness of the composite material 5 $\mu$m to 10 pm;

   the composite material further comprises a plasticizer and an antioxidant;
   the composite material is rolled on at least a side of the negative electrode;
   the negative electrode comprises a current collector and a negative active substance layer (2) disposed on at least a side of the current collector (3);
   the negative active substance layer (2) comprises graphite;
   the composite material is rolled close to a side of the negative active substance layer (2) away from the current collector (3).

10. The method of preparing the secondary battery according to claim 8, wherein the secondary battery also comprises a positive electrode, a negative electrode, and an electrolyte solution.

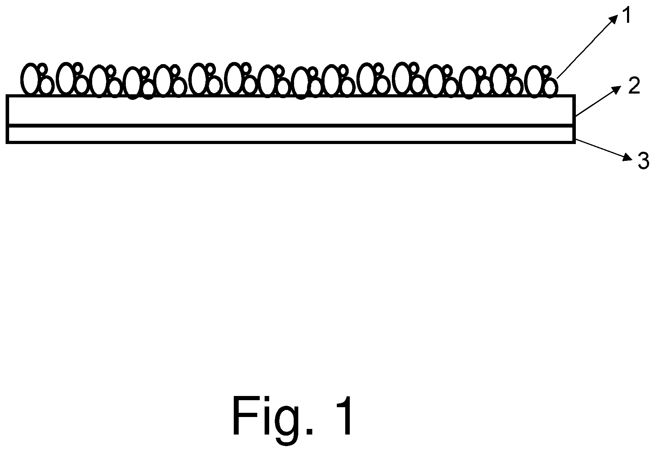

# Fig. 1

Europäisches
Patentamt

European
Patent Office

Office européen
des brevets

# EUROPEAN SEARCH REPORT

Application Number

EP 23 20 8155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 273 645 A (HEFEI XIANJIE NEW ENERGY TECH CO LTD) 25 January 2019 (2019-01-25) * claims 1,3,4,7,8; examples * | 1-3,6, 8-10 | INV. H01M10/0525 H01M50/403 H01M50/409 |
| A | US 2022/306473 A1 (XU ZHEN [CN] ET AL) 29 September 2022 (2022-09-29) * the whole document * | 1-10 | H01M50/431 H01M50/46 |

TECHNICAL FIELDS
SEARCHED          (IPC)

H01M

The present search report has been drawn up for all claims

| Place of search | Date of completion of the search | Examiner |
|---|---|---|
| Munich | 22 March 2024 | Duval, Monica |

EPO FORM 1503 03.82 (P04C01)

## ANNEX TO THE EUROPEAN SEARCH REPORT
## ON EUROPEAN PATENT APPLICATION NO.

EP 23 20 8155

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2024

| Patent document cited in search report | Publication date | Patent family member(s) | Publication date |
|---|---|---|---|
| CN 109273645 A | 25-01-2019 | NONE | |
| US 2022306473 A1 | 29-09-2022 | JP 7255911 B2 | 11-04-2023 |
| | | JP 2022522086 A | 14-04-2022 |
| | | US 2022306473 A1 | 29-09-2022 |
| | | WO 2021179232 A1 | 16-09-2021 |

EPO FORM P0459

For more details about this annex : see Official Journal of the European Patent Office, No. 12/82